# EUROPEAN PATENT APPLICATION

(11) **EP 3 565 232 A1**
(43) Date of publication of application: **06.11.2019**
(21) Application number: 19171988.9
(22) Date of filing: 30.04.2019
(51) Int. Cl.: H04N 1/407

(54) **OUTPUT IMAGE GENERATING METHOD OF AN IMAGE READING DEVICE, AND AN IMAGE READING DEVICE**

(30) Priority: 01.05.2018 JP 2018088445
(71) Applicant: Seiko Epson Corporation, Tokyo 160-8801 (JP)
(72) Inventor: KASAI, Tsuneo, Suwa-shi, Nagano 392-8502 (JP); KOBAYASHI, Makoto, Suwa-shi, Nagano 392-8502 (JP)
(74) Representative: Miller Sturt Kenyon

(57) **Abstract**

A controller 60 of an image reading device 1 acquires a scanned image by reading a document. An image processor 30 generates an output image by applying to the acquired scanned image different image processes based on whether or not specific pixels, which are pixels with a pixel value greater than a white reference value, are contained in the scanned image.

## Description

### BACKGROUND

### 1. Technical Field

The present invention relates to an output image generating method of an image reading device that acquires a scanned image containing pixels with a pixel value greater than a white reference value, and an image reading device.

This application is based upon Japanese Patent Application 2018-088445 filed on May 10, 2018, the entire contents of which are incorporated by reference herein.

### 2. Related Art

JP-A-2008-271386 describes an image reading device of the related art. More specifically, JP-A-2008-271386 describes an image reading device that, when a document is scanned and a fluorescent color is detected, reduces the amount of light per pixel and then scans again in order to improve the results of scanning documents containing fluorescent colors.

One problem with the related art as described above is that document scanning repeats and reading a document containing fluorescent colors is time-consuming.

### SUMMARY

An output image generating method of an image reading device according to the invention includes an acquisition step of reading a document and acquiring a scanned image; and a generating step of generating an output image by applying different image processes to the scanned image according to whether or not specific pixels, which are pixels with a pixel value greater than a white reference value, are contained in the scanned image. When the specific pixels are not contained in the scanned image, the generating step applies an image process of correcting pixel values of pixels in the scanned image to higher pixel values than when the specific pixels are contained in the scanned image.

An output image generating method of an image reading device according to another aspect of the invention includes: an acquisition step of reading a document and acquiring a scanned image; and a generating step of generating an output image by applying different normalization processes to the scanned image according to whether or not specific pixels, which are pixels with a pixel value greater than the white reference value, are contained in the scanned image.

An image reading device according to another aspect of the invention includes an acquirer configured to read a document and acquire a scanned image; and a generator configured to generate an output image by applying different image processes to the scanned image according to whether or not specific pixels, which are pixels with a pixel value greater than a white reference value, are contained in the scanned image. When the specific pixels are not contained in the scanned image, the generator applies an image process of correcting pixel values of pixels in the scanned image to higher pixel values than when the specific pixels are contained in the scanned image.

An image reading device according to another aspect of the invention includes: an acquirer configured to read a document and acquire a scanned image; and a generator configured to generate an output image by applying different normalization processes to the scanned image according to whether or not specific pixels, which are pixels with a pixel value greater than a white reference value, are contained in the scanned image.

Other objects and attainments together with a fuller understanding of the invention will become apparent and appreciated by referring to the following description and claims taken in conjunction with the accompanying drawings.

### BRIEF DESCRIPTION OF THE DRAWINGS

Embodiments of the present invention will now be described by way of further example only and with reference to the accompanying drawings, in which:
FIG. 1 schematically illustrates the configuration of the conveyance path in an image scanner.
FIG. 2 is a block diagram illustrating the control system of an image scanner.
FIG. 3 is a graph describing a method of setting the white reference value according to the related art.
FIG. 4 is a graph explaining the method of setting a white reference value according to the first embodiment of the invention.
FIG. 5 is a flow chart of the output image generating method of an image reading device according to the first embodiment of the invention.
FIG. 6 shows an example of a scanned image.
FIG. 7 is a graph showing an example of pixel values of pixels representing a fluorescent color.
FIG. 8 is a graph of pixel values after a first normalization process of pixels in FIG. 7.
FIG. 9 is a graph showing an example of pixel values of pixels representing a normal color.
FIG. 10 is a graph of pixel values after a second normalization process of pixels in FIG. 9.
FIG. 11 illustrates the change in pixel values resulting from the first normalization process (color conversion).
FIG. 12 illustrates the change in pixel values resulting from the first normalization process (monochrome conversion).
FIG. 13 illustrates the change in pixel values resulting from the second normalization process (color conversion).
FIG. 14 is a flow chart of the output information generating method of an image reading device according to a second embodiment of the invention.
FIG. 15 shows an example of the result of a color conversion process applied to the scanned image in FIG. 6.
FIG. 16 describes channel information for pixels.
FIG. 17 is a flow chart of the output image generating method of an image reading device according to a third embodiment of the invention.
FIG. 18 shows an example of the result of applying a color conversion process and an area identification image merging process applied to the scanned image in FIG. 6.
FIG. 19 is a graph describing another example of a method of setting the white reference value.
FIG. 20 describes another example of a method of identifying areas containing fluorescent colors.

### DESCRIPTION OF EMBODIMENTS

### Embodiment 1

An output image generating method of an image reading device, and an image reading device, according to a preferred embodiment of the invention are described below. This embodiment describes a sheet feed scanner configured to read while conveying a document as an example of an image reading device according to the invention.

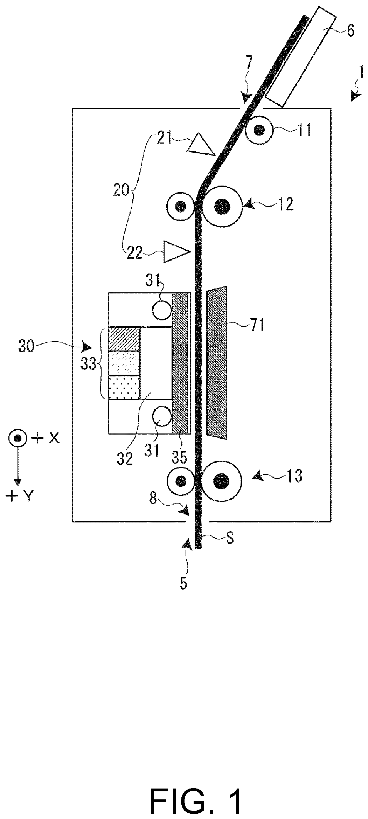

FIG. 1 illustrates the configuration of the conveyance path part of an image reading device 1 according to the invention. This image reading device 1 is configured to receive a document S, which in the example is a continuous web medium, introduced along a guide 6 from the document feed port 7, convey the document S through the internal conveyance path 5, and discharge the document S from the exit 8. Note that the document S is not limited to a continuous web, and may be cut-sheet media.

A paper feed roller 11, a pair of upstream conveyance rollers 12, a pair of downstream conveyance rollers 13, a paper detector 20, and an image scanner 30, are disposed along the conveyance path 5. A document presser 71 is also disposed to the 5 opposite the image scanner 30.

The paper feed roller 11 is disposed near the document feed port 7. The paper feed roller 11 feeds a document S introduced from the document feed port 7 to the conveyance path 5.

The upstream conveyance rollers 12 are located upstream from the image scanner 30 in the conveyance direction of the document S, that is, on the -Y side of the image scanner 30 as seen in FIG. 1. The downstream conveyance rollers 13 are located downstream from the image scanner 30 in the conveyance direction of the document S, that is, on the +Y side of the image scanner 30. The upstream conveyance rollers 12 and downstream conveyance rollers 13 convey the document S through the conveyance path 5 in the +Y direction.

The paper detector 20 includes a document sensor 21 and a paper feed sensor 22. The paper feed sensor 22 is disposed downstream from the document sensor 21 in the conveyance direction of the document S, that is, on the +Y side.

In the configuration in this example the document sensor 21 is disposed upstream from the upstream conveyance rollers 12, but may be disposed on the downstream side of the upstream conveyance rollers 12. Likewise, the paper feed sensor 22 is disposed on the downstream side of the upstream conveyance rollers 12, but may be disposed upstream from the upstream conveyance rollers 12.

The document sensor 21 is a sensor for detecting that a document S was supplied to the conveyance path 5. The paper feed sensor 22 is a sensor for detecting the document S was conveyed to an indexing position. The detection position of the paper feed sensor 22 is therefore the indexing position.

The image scanner 30 includes a white light source 31, a lens array 32, a color sensor 33, and a cover glass 35. A color sensor module comprising these components and an A/D converter 34 is used as the image scanner 30 in this embodiment. Note that the color sensor 33 is an example of an image reading sensor.

Light emitted from the white light source 31 passes through the optically transparent cover glass 35, and is incident to the document presser 71 or the document S.

The document presser 71 prevents the document S from floating, and prevents uneven illumination of the document. The document presser 71 also functions as a white reference plate for setting the white reference value.

Light reflected from the document presser 71 or the document S passes the lens array 32 and is incident to the color sensor 33. The color sensor 33 is configured with three rows of color sensors for detecting red, green, and blue (RGB) colors. The color sensor rows comprise multiple sensor chips arrayed in a direction intersecting the conveyance direction of the document S, that is, along the X-axis.

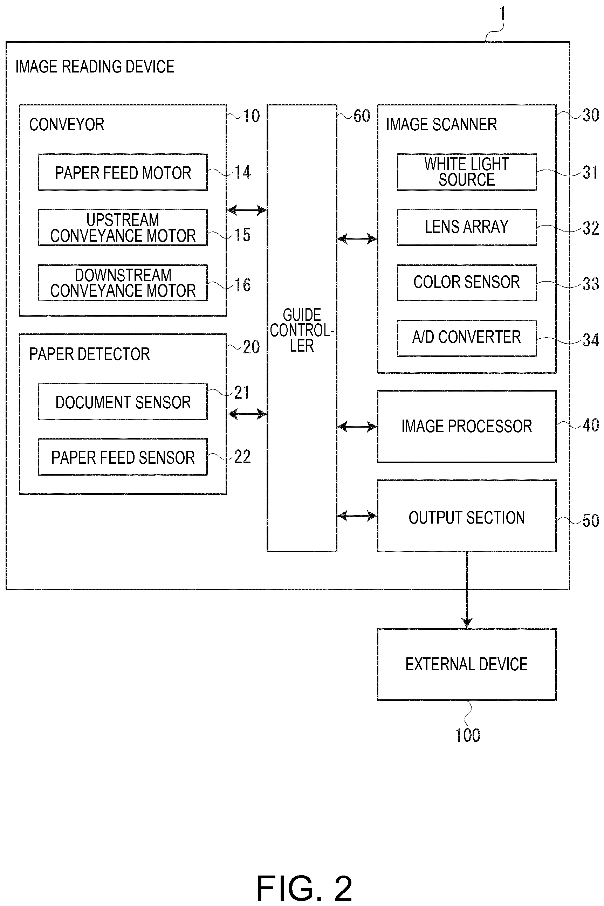

FIG. 2 is a block diagram of the control system of the image reading device 1. The image reading device 1 has a conveyor 10, paper detector 20, image scanner 30, image processor 40, output section 50, and controller 60. The controller 60 is an example of an acquirer. The image processor 40 and controller 60 are an example of a data generator.

The conveyor 10 includes a paper feed motor 14, an upstream conveyance motor 15, and a downstream conveyance motor 16.

The paper feed motor 14 drives the paper feed roller 11. The upstream conveyance motor 15 and downstream conveyance motor 16 respectively drive the drive rollers of the upstream conveyance rollers 12 and downstream conveyance rollers 13. Note that the upstream conveyance rollers 12 and downstream conveyance rollers 13 may also be driven by a common conveyance motor.

The paper detector 20 includes the document sensor 21 and paper feed sensor 22. The document sensor 21 and paper feed sensor 22 are optical sensors comprising an emitter and a photodetector, for example, illuminate the conveyance path 5 with light from the emitter, and detect the presence of a document S by the photodetector detecting the reflection of the emitted light. Based on the detection result from the paper detector 20, the controller 60 determines the position of the document S on the conveyance path 5. For example, when the detection result from the document sensor 21 changes from No Document to Document Detected, the controller 60 determines that a document S was introduced to the conveyance path 5. When the detection result from the paper feed sensor 22 changes from No Document to Document Detected, the controller 60 determines that a document S was conveyed to the indexing position.

The image scanner 30 includes a white light source 31, lens array 32, color sensor 33, and A/D converter 34. The image scanner 30 reads the document S according to the color/monochrome color setting, which is one of the scanner settings, and acquires a scanned image in color or a scanned image in gray scale.

The white light source 31 is, for example, a white LED, and illuminates the area to be scanned from the -Y side and the +Y side.

The lens array 32 in this example is a SELFOC lens array, and forms a continuous image by overlaying same-size erect images from multiple lenses arrayed in a direction intersecting the conveyance direction of the document S, that is, along the X-axis.

The color sensor 33 is, for example, a CCD (Charge Coupled Device) sensor or a CMOS (Complementary Metal Oxide Semiconductor) sensor forming RGB sensor lines. A color filter for limiting the wavelengths of the incident reflected light to red, green, and blue is disposed to the respective sensor lines. Each sensor line comprises multiple sensor chips arrayed along the X-axis, and each sensor chip includes a photoelectric conversion element. The amount of light picked up by the photoelectric conversion element is accumulated as an electric charge, and the charge is output as an analog signal. The A/D converter 34 converts the analog signal output from the image sensor 33 to a digital signal.

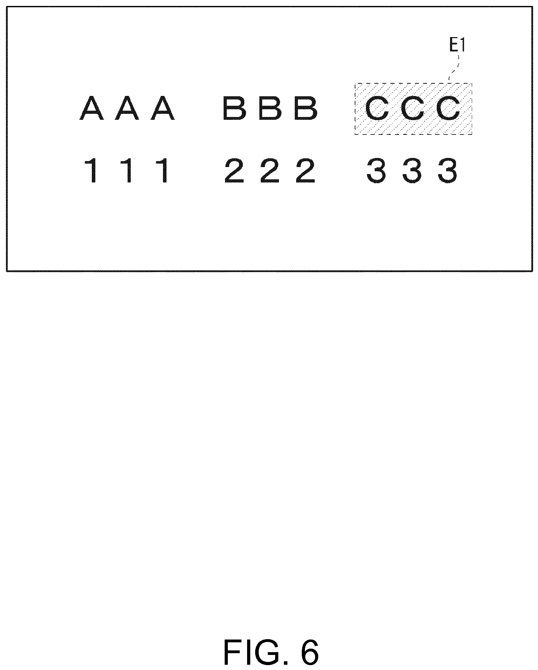

The image processor 40 applies various image processes to the scanning data acquired by the image scanner 30, and generates an output image. The image processor 40 in this example is a dedicated ASIC (Application Specific Integrated Circuit) for image processing. While described in detail below, the image processor 40 applies different image processes based on whether or not specific pixels, which are pixels with a pixel value exceeding the white reference value, are contained in the scanned image. The specific pixels are pixels with a color having reflectance greater than white, such as fluorescent color pixels. To improve the reproducibility of the color tones of fluorescent colors, the image processor 40 in this embodiment applies different normalization processes to fluorescent color areas E1 containing specific pixels (see FIG. 6), and normal color areas, which are areas other than fluorescent color areas E1. Fluorescent color areas E1 are an example of a first area in the accompanying claims. Note that the image processor 40 may also apply image processes performed by a typical image reading device, such as shading correction, gamma correction, line correction, and skew correction.

The output section 50 outputs the output image after image processing by the image processor 40 to an external device 100. The external device 100 may be a storage device or a printer. The storage device may be a network storage device. A printer may be any printer connected by a cable or network. The external device 100 may also output the output image to a PC (Personal Computer) or display device.

The output image may also be output to an external device 100, and the output image may be output to an internal storage device of the image reading device 1. If the image reading device 1 is configured with an integrated printer, the output image may also be output to and printed by the integrated printer.

The controller 60 is connected to and controls operation of the devices described above. The controller 60 in this example comprises a processor (such as a CPU (Central Processing Unit), ASIC, or combination thereof), ROM (Read Only Memory), and RAM (Random Access Memory).

By the configuration described above, the controller 60 determines whether or not specific pixels are in the scanned image acquired by reading the document S, and if specific pixels are included, identifies the fluorescent color areas E1 containing the specific pixels. The image processor 40 applies a first normalization process, which is a normalization process using a value exceeding the white reference value as the maximum value, to the fluorescent color areas E1; and applies a second normalization process, which is a normalization process using the white reference value as the maximum value, to normal color areas outside the fluorescent color areas E1. This process can be expected to improve the reproducibility of the color tones of fluorescent colors inside the fluorescent color areas E1.

Problems with conventional methods of applying a normalization process using the white reference value as the maximum value to fluorescent color areas E1 are described next.

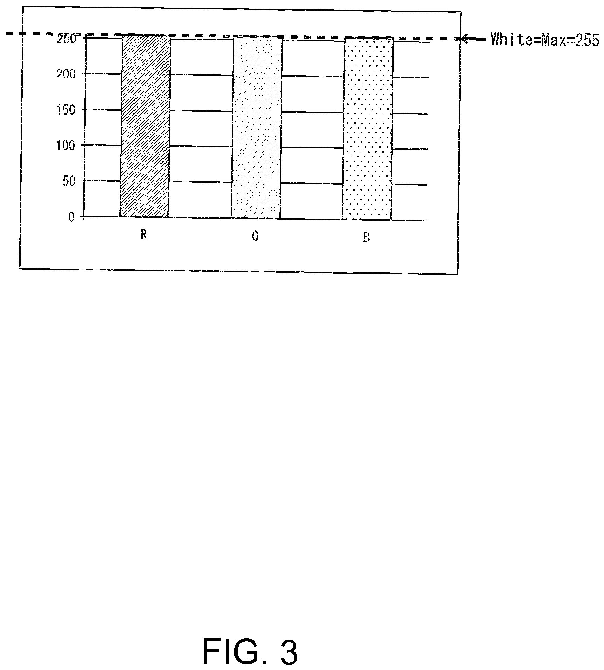

FIG. 3 is a graph describing the conventional method of setting the white reference value. In the conventional method, the RGB output values of the color sensor 33 when reading white are set as the white reference value to maximize the output bit count of the color sensor 33. The maximum output value of the color sensor 33 therefore matches the white reference value. Note that in this figure the output bit count of the color sensor 33 is 8 bits, indicating a maximum output value of 255. In other words, a pixel is considered to be white if each of the required RGB valves is 255. Note that if the number of output bits is nine or more, the pixel value will also differ, but the effect is the same.

Phosphors such as used in fluorescent markers are characterized by changing a portion of the incident light to a different color. For example, yellow fluorescent colors are particularly bright because when blue light is incident, part of the blue light is absorbed, that is, green and red light are reflected, and a particularly vivid yellow is produced.

When yellow phosphors are read with an image scanner 30 configured with color sensors as described above, the green and red output values are higher than the white reference value, exceeding the dynamic range of the color sensor 33, and part of the blue light is absorbed as described above, and resulting in reading a hue that differs from the hue in the document S. Note that the upper limit of the dynamic range of the color sensor 33 is referred to below as the maximum output value of the color sensor 33.

Before reading a document S, the image reading device 1 according to this embodiment of the invention therefore sets the scanning settings to a first setting in which the white reference value is a value lower than 255, the maximum output value of the color sensor 33. This process of setting the scanning settings to a first setting is an example of a setting process in the accompanying claims.

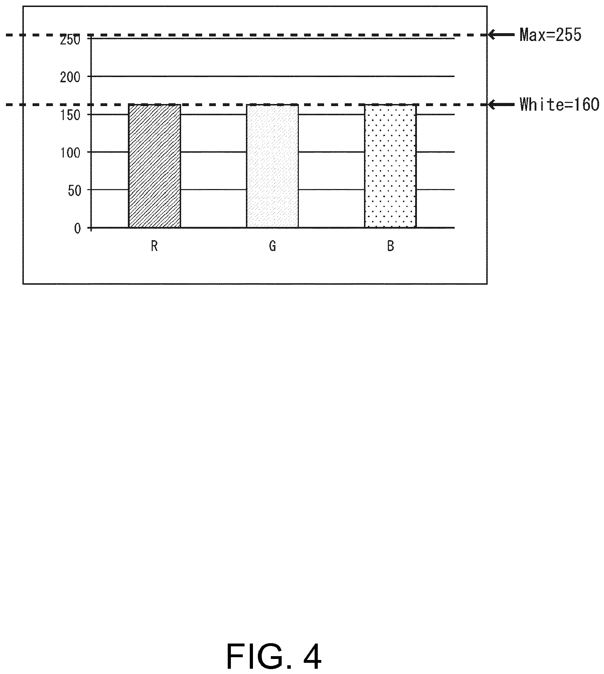

FIG. 4 is a graph describing the method of setting the white reference value in this embodiment of the invention. In this example the white reference value is set so that the RGB output values of the color sensor 33 are 160 when reading a white reference. In other words, each pixel for which each of the acquired RGB valves is 160 or greater is determined as a white pixel. As a result, when reading a fluorescent color, saturation of the output values of the color sensor 33 can be suppressed. Note that 160 is simply one example of the white reference value setting, and the maximum output value of the color sensor 33 may be set to a lower value.

The image reading device 1 according to this embodiment also applies to the fluorescent color areas E1 in the scanned image a first normalization process using a value greater than the white reference value as the maximum value. This suppresses fluorescent colors being read as a different hue.

The image reading device 1 also applies a second normalization process using the white reference value as the maximum value to normal color areas. This suppresses normal colors from becoming too dark.

These processes are described in detail below.

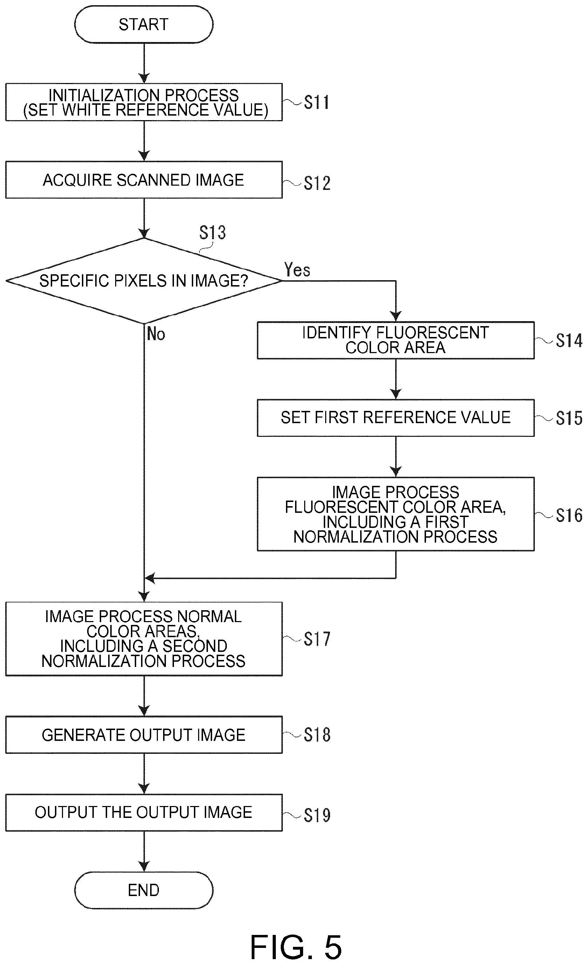

FIG. 5 is a flow chart of the output image generating method of the image reading device 1. The image reading device 1 starts the scanning process in response to a user command. The user command may be issued through an operating panel not shown of the image reading device 1, or by a user operation on the personal computer side if the external device 100 is a personal computer. When the user operation is detected to start scanning, the image reading device 1 executes an initialization process (S11). The initialization process includes a process of determining based on the detection result from the paper feed sensor 22 whether or not the document S was conveyed to the indexing position.

If the image reading device 1 determines the document S was not conveyed to the indexing position, the image reading device 1 determines based on the detection result from the document sensor 21 whether or not a document S was introduced to the conveyance path 5.

The image reading device 1 reports an error if it determines a document S was not introduced to the conveyance path 5, and conveys the document S to the indexing position if it determines a document S was introduced to the conveyance path 5.

The image reading device 1 also sets the white reference value as part of the initialization process. The image reading device 1 reads the document presser 71, which is configured to function as a white reference plate, and sets the exposure time of the color sensor 33 and the light output level and gain of the white light source 31 so that the output value goes to 160 in this example. When the above initialization process ends, the image reading device 1 conveys and reads the document S, and acquires a scanned image (S12).

Note that step S12 is an example of an acquisition process in the accompanying claims.

The image reading device 1 then determines whether or not there are specific pixels in the acquired scanned image (S13). In this embodiment, if there is a specific number of consecutive pixels with a pixel of which any R, G or B value is greater than 160, which is the white reference value, detected along the X-axis or the Y-axis, and a group of these pixels occupies a specific area or greater, those pixels are determined to be specific pixels.

The specific pixels being consecutive means that there is a continuous train of specific pixels with no spaces equal to or greater than a specific number of pixels between the pixels. For example, if the specific pixel count is two, and every other pixel is a specific pixel, the specific pixels are considered to be consecutive. This prevents identifying as specific pixels random pixels having a pixel value greater than 160, the white reference value, due to noise. If the scanned image is determined to contain specific pixels (S13: Yes), the image reading device 1 then identifies the fluorescent color areas E1 containing the specific pixels (S14).

A method of identifying the fluorescent color areas E1 is described next. FIG. 6 shows an example of a scanned image. The scanned image in this example shows the result of reading a document S in which the letters 'CCC' in a document with two lines of text were highlighted with a fluorescent marker. The image reading device 1 identifies the area where there are consecutive specific pixels in the scanned image as a fluorescent color area E1. The image reading device 1 also identifies the area inside the area where there are consecutive specific pixels as a fluorescent color area E1. For example, in this scanned image, the pixels for the lines forming the letters CCC are not specific pixels, but because they are inside the area of consecutive specific pixels, the lines of the letters CCC are also considered part of the fluorescent color area E1. In other words, the fluorescent color area E1 is not limited to an area in which all pixels are specific pixels, and may include pixels other than specific pixels.

Note also that if the set of pixels inside the area of consecutive specific pixels occupies an area of a specific size or greater, those pixels may be treated as pixels in a normal color area.

When a fluorescent color area E1 is identified, the image reading device 1 sets a first reference value, which is the reference value for a first normalization process applied to the identified fluorescent color area E1 (S15). More specifically, the image reading device 1 sets the highest pixel value of the pixels in the identified fluorescent color area E1 as the first reference value.

A reference value as used herein denotes the value that is the maximum output value of the color sensor 33 after the normalization process. When there are multiple fluorescent color areas E1 in the scanned image, the image reading device 1 sets a first reference value for each fluorescent color area E1.

The image reading device 1 then applies image processes including the first normalization process to the fluorescent color area E1 (S16). The image reading device 1 then applies image processes including the second normalization process using the white reference value set in the initialization process as the reference value to the normal color areas (S17). The image reading device 1 then generates an output image resulting from the image processes applied in S16 and S17 to the scanned image (S18), and outputs the generated output image to the external device 100 (S19).

However, if the image reading device 1 determines there are no specific pixels in the scanned image (S13: No), S14 - S16 are skipped.

Steps S13 - S18 are an example of a generating process in the accompanying claims.

Specific examples of the processes executed in S16 and S17 are described next. This example describes operation when scanning the document S with the color mode set to color and generating a color output image.

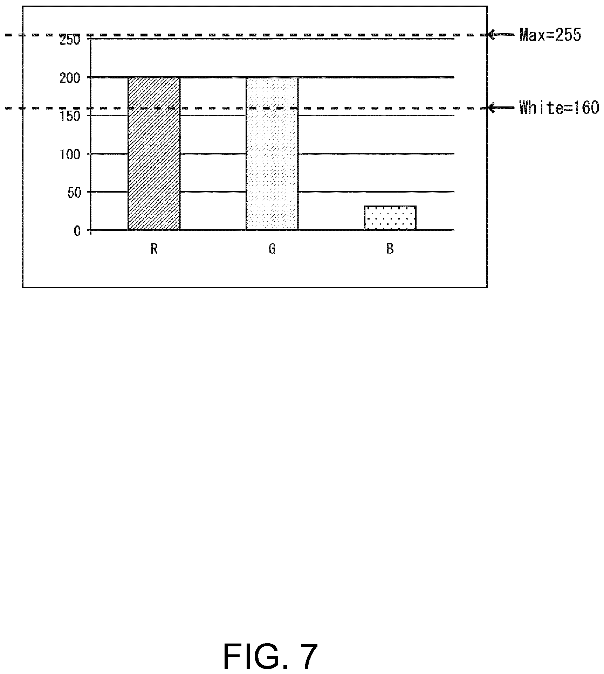

FIG. 7 is a graph showing an example of pixel values for pixels representing a fluorescent color. As described above, the image reading device 1 applies a first normalization process using a first reference value as the maximum pixel value to the fluorescent color area E1 (see S16 in FIG. 5). In the example in FIG. 7, the maximum RGB pixel value is 200, and the first reference value is therefore set to 200.

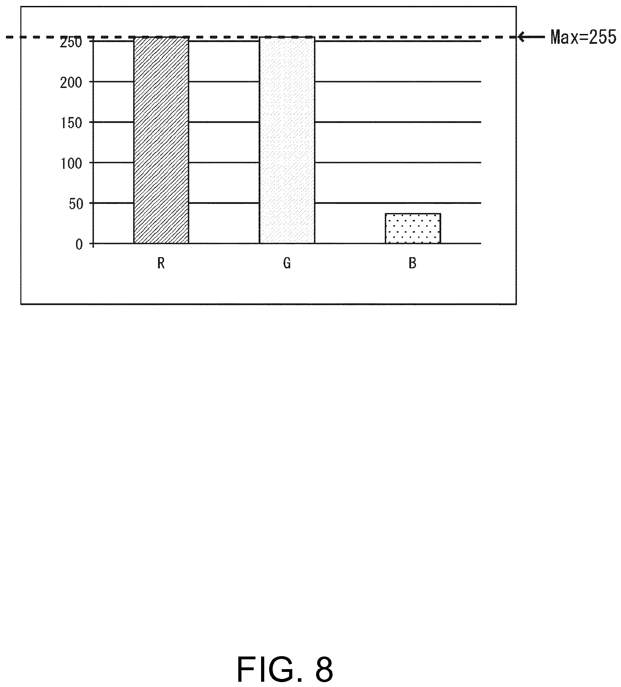

FIG. 8 is a graph showing the pixel values after the first normalization process is applied to the pixels shown in FIG. 7. In the first normalization process, the image reading device 1 calculates the pixel values for each color by applying a linear conversion so that the first reference value of 200 goes to the maximum output value of the color sensor 33, that is, 255.

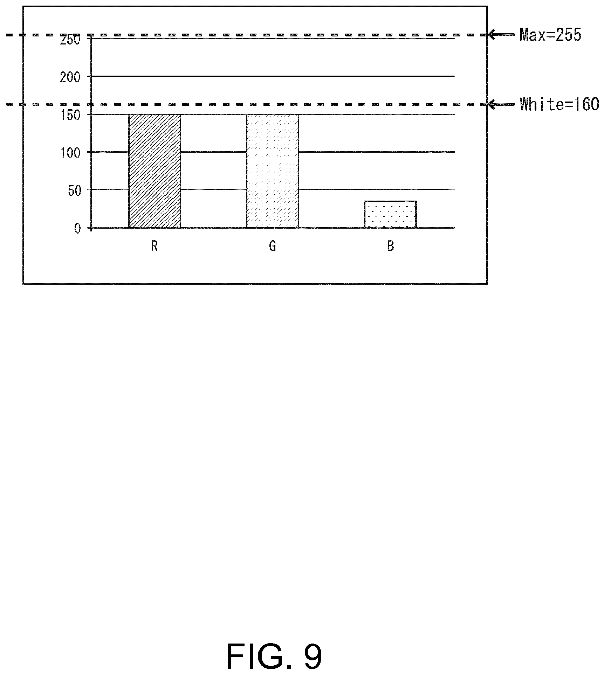

FIG. 9 is a graph showing an example of the pixel values of pixels representing normal colors. As described above, the image reading device 1 applies a second normalization process using the white reference value as the maximum output value to the normal color areas (see S17 in FIG. 5). As shown in FIG. 4, because the white reference value in this example is 160, the reference value of the second normalization process is 160.

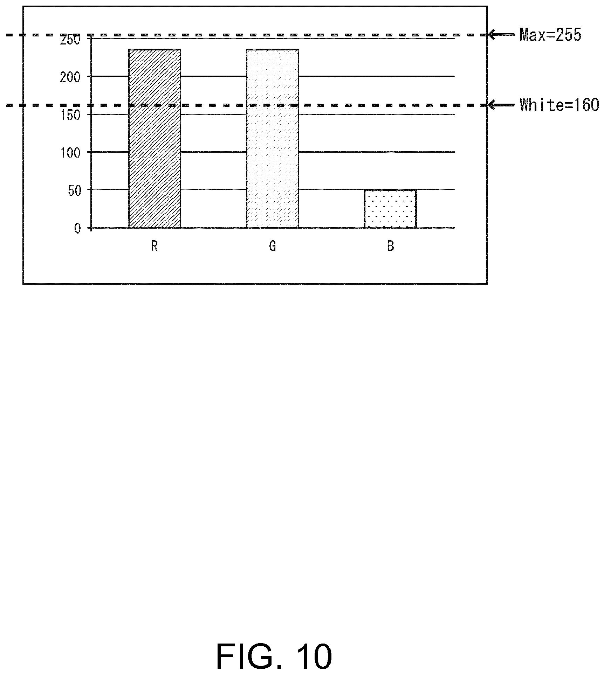

FIG. 10 is a graph showing the pixel values after the second normalization process is applied to the pixels shown in FIG. 9. In the second normalization process, the image reading device 1 calculates the pixel values for each color by applying a linear conversion so that the white reference value of 160 goes to the maximum output value of the color sensor 33, that is, 255.

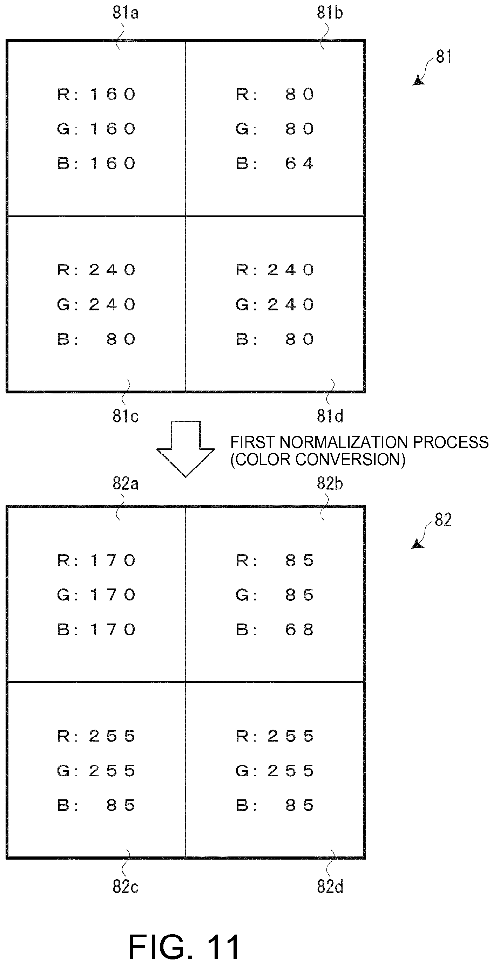

FIG. 11 illustrates the corrected change in pixel values resulting from the first normalization process. The pixel set indicated by the reference numeral 81 is contained in a fluorescent color area E1. In this example, the image reading device 1 applies a first normalization process using the maximum output value of 240 in the fluorescent color area E1 as a first reference value of 240.

The pixel set indicated by the reference numeral 82 shows the pixel values after applying the first normalization process and color conversion to pixel set 81. When generating a color output image, the image reading device 1 therefore applies the same linear conversion to RGB pixels.

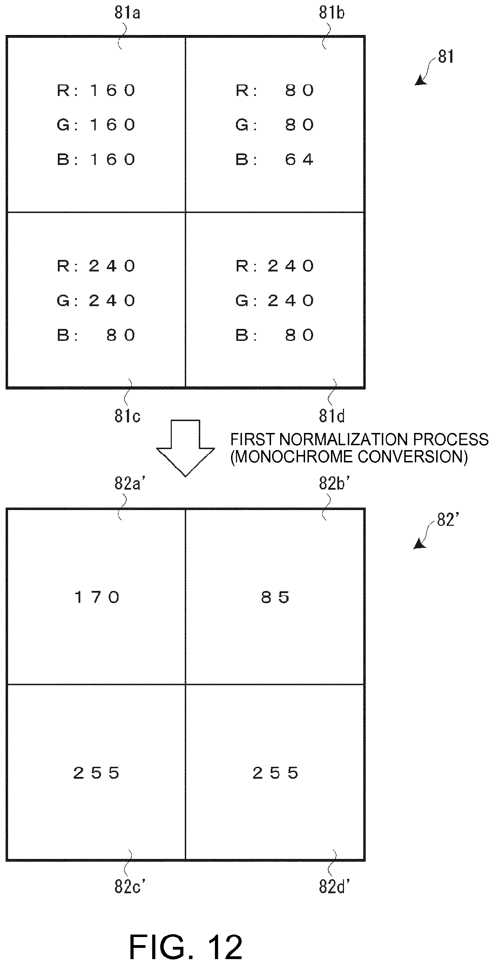

FIG. 12 illustrates the corrected change in pixel values when scanning with the color mode set to monochrome and generating a gray scale output image. As when scanning in the color scanning mode, when scanning in the monochrome scanning mode, the image reading device 1 applies a first normalization process using the maximum output value of 240 in the fluorescent color area E1 as a first reference value of 240. The pixel set indicated by the reference numeral 82' shows the pixel values after applying the first normalization process and monochrome conversion to pixel set 81.

Because this process calculates the pixel values after monochrome conversion based only on the green pixel values, linear conversion is applied only to the green pixels. Note that this process is not limited to using only one of the RGB pixel values, and the pixel values after monochrome conversion may be calculated using other known techniques, including a weighted average method that averages specifically weighted RGB pixel values.

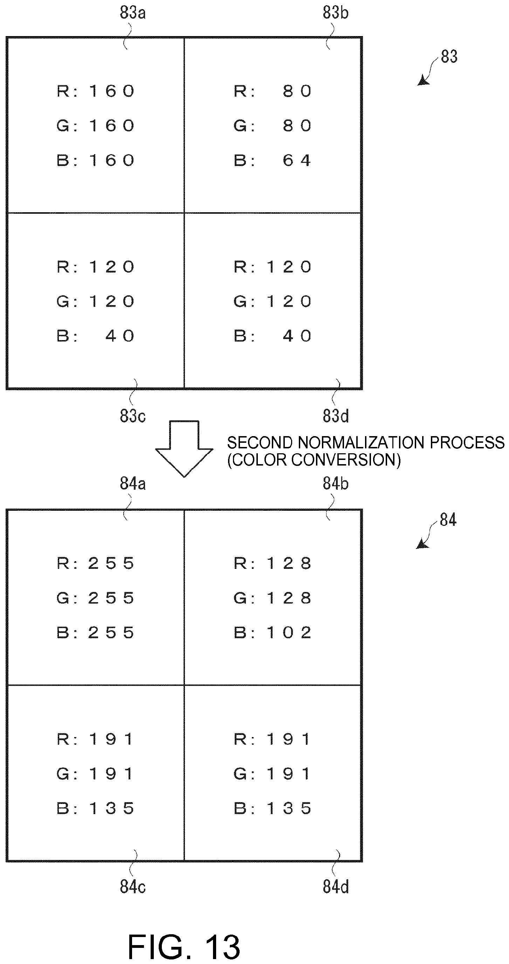

FIG. 13 illustrates the corrected change in pixel values resulting from the second normalization process. In this example the document S is scanned with the color mode set to color and a color output image is generated. The pixel set indicated by the reference numeral 83 is contained in a normal color areas. In this example, the image reading device 1 applies the second normalization process so that the white reference value of 160 goes to the maximum output value of the color sensor 33, that is, 255. The pixel set indicated by reference numeral 84 shows the pixel values after applying the second normalization process and color conversion to pixel set 83.

Comparing FIG. 11 and FIG. 13, the pixels 81a and 81b in pixel set 81 before normalization, and the pixels 83a and 83b in pixel set 83 have the same pixel values. However, the pixel values of pixels 84a and 84b after applying the second normalization process to pixels 83a, 83b are greater than the pixel values of pixels 82a and 82b after applying the first normalization process to pixels 81a, 81b. When the second normalization process is applied, the pixel values of pixels in the scanned image are corrected to higher pixel values than when the first normalization process is applied.

As described above, the image reading device 1 according to this embodiment applies different normalization processes to fluorescent color areas E1 containing specific pixels in the scanned image, and normal color areas other than fluorescent color areas E1. More specifically, the image reading device 1 applies a first normalization process using a value greater than the white reference value as the maximum value to the fluorescent color areas E1, and applies a second normalization process using the white reference value as the maximum value to normal color areas. As a result, the pixel values are corrected so that the pixel values of pixels in the scanned image are higher in normal color areas than in fluorescent color areas E1. The image reading device 1 according to the third embodiment of the invention also reads the document S with the white reference value of the scanning settings a lower value than the maximum output value of the color sensor 33.

By setting the white reference value to a lower value than the maximum output value of the color sensor 33, this configuration can prevent saturation of the output values of the color sensor 33. Furthermore, by setting a lower white reference value, the scanned results of normal colors are darker than in the actual document S. However, because the second normalization process applied to the normal color areas corrects the pixel values so that the pixel values of pixels in the scanned image are higher than in the fluorescent color areas E1, normal colors do not become too dark and can be reproduced with natural brightness.

Furthermore, because the pixel values in the fluorescent color areas E1 are corrected by a first normalization process using the highest pixel value in the fluorescent color area E1 as the reference value, the contrast between the brightness of fluorescent colors in the fluorescent color area E1 and normal colors can be more accurately reproduced.

In addition, because the image reading device 1 according to this embodiment does not require a pre-scanning step to detect the presence of specific pixels, documents S containing fluorescent colors can be read in the same amount of time as documents S not containing fluorescent colors.

### Embodiment 2

A second embodiment of the invention is described next. The first embodiment described above applies different processes to the fluorescent color area E1 and normal color areas, but this embodiment enables good reproduction of documents S containing fluorescent colors on the external device 100 side by adding information identifying fluorescent color areas E1 to the output image based on the scanned image.

This embodiment is described focusing on differences with the first embodiment. Like parts in this embodiment and the first embodiment described above are identified by like reference numerals, and further description thereof is omitted. Variations applicable to like elements in this embodiment and the first embodiment are also applicable to this embodiment.

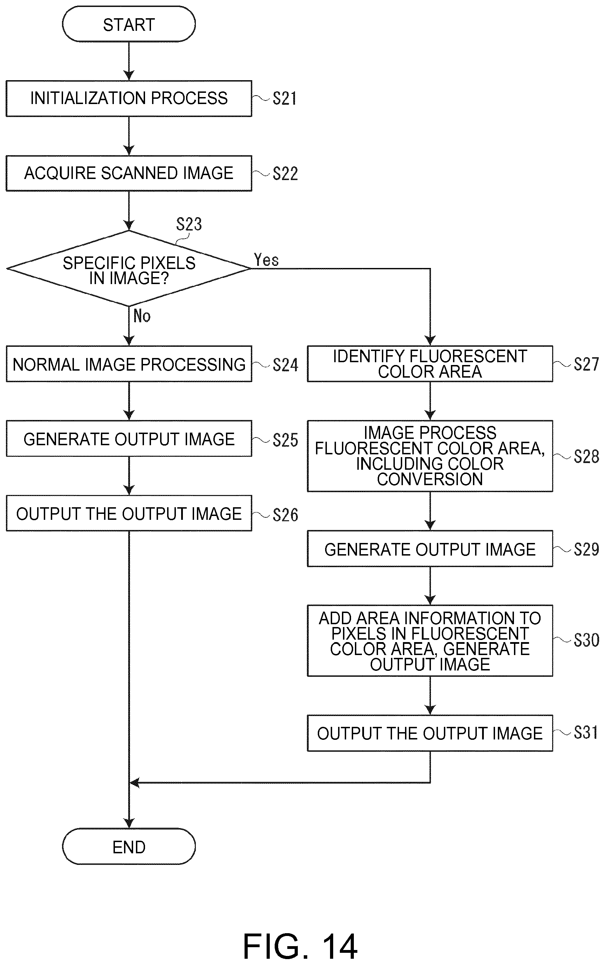

FIG. 14 is a flow chart of the output information generating process of the image reading device 1 according to this embodiment. When the document S reading process starts, the image reading device 1 first executes the initialization process (S21), and then acquires a scanned image (S22). The image reading device 1 then determines if specific pixels are contained in the acquired scanned image (S23), and if there are no specific pixels (S23: No), executes normal image processing steps such as shading correction, gamma correction, line correction, and skew correction (S24). The image reading device 1 then generates an output image by applying these normal image processes to the acquired scanned image (S25), and outputs the generated output image to the external device 100 (S26).

If the scanned image is determined to contain specific pixels (S23: Yes), the image reading device 1 identifies the fluorescent color areas E1 containing the specific pixels (S27). The image reading device 1 may also apply a shape correction process to correct the shape of the area so that the fluorescent color area E1 is rectangular.

The image reading device 1 then applies image processes including a color conversion process to the identified fluorescent color area E1 (S28). This color conversion process is described next.

The image reading device 1 converts the color of specific pixels in the fluorescent color area E1 to a color based on surrounding pixels outside the fluorescent color area E1. When specific pixels have a fluorescent color, this color conversion process can delete the fluorescent color. Image processes including a color conversion process include normal image processes such as shading correction, gamma correction, line correction, and skew correction.

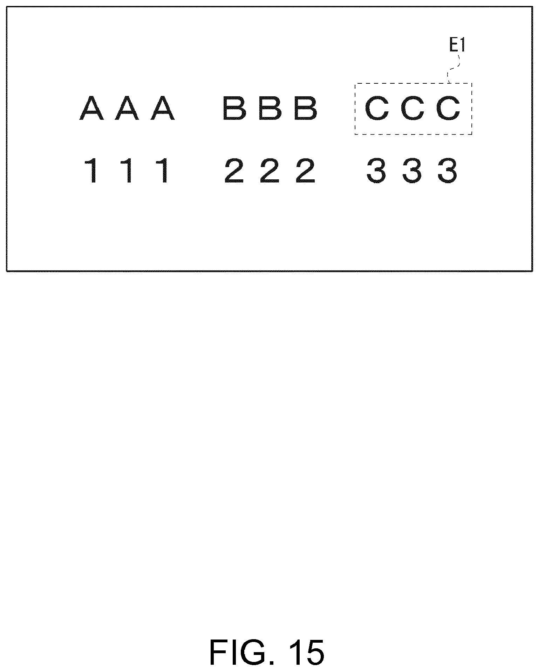

FIG. 15 shows an example of the result of color conversion processing the scanned image shown in FIG. 6. As shown in the figure, the color of specific pixels in the fluorescent color area E1 are converted based on pixels around the fluorescent color area E1. That is, if the area around the fluorescent color area E1 is a white background, the color of the specific pixels in the fluorescent color area E1 is converted to white. Note that converting to a color based on pixels around the fluorescent color area E1 can be done using technology known from the literature, such as using color information for multiple pixels around the fluorescent color area E1, and converting to the color of the average or a median value.

Returning to FIG. 14, the image reading device 1 generates the output image by the above color conversion process and other image processes (S29). The image reading device 1 also generates output information adding, to the pixels in the fluorescent color area E1 in the output image, area information indicating those pixels are pixels corresponding to a fluorescent color area E1 in the scanned image (S30).

Note that "pixels corresponding to a fluorescent color area E1 in the scanned image" means "pixels contained in an area in the output image that correspond to a fluorescent color area E1 in the scanned image." An area in the output image that corresponds to a fluorescent color area E1 in the scanned image is referred to below as a 'fluorescent color correspondence area of the output image.'

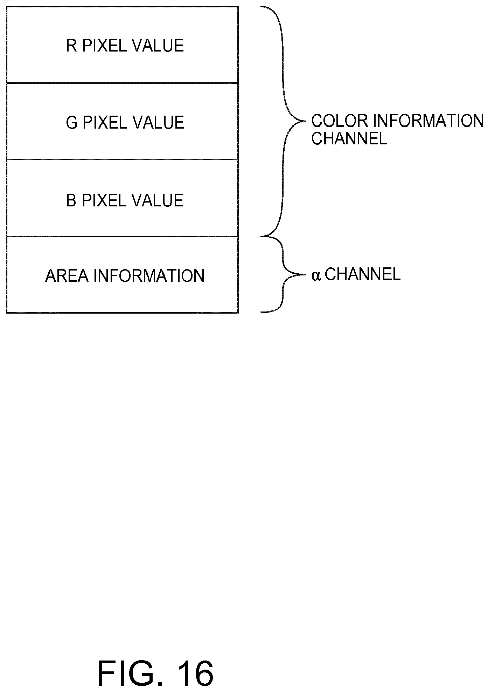

FIG. 16 describes channel information for pixels. The channel information includes a color information channel, and an α channel.

The color information is a channel providing RGB color information. The color information is expressed as an 8-bit pixel value for each color.

The α channel is a channel indicating area information. The area information is a 1-bit value indicating whether or not the pixel is in a fluorescent color correspondence area of the output image, that is, whether or not the pixel is in a fluorescent color area E1 in the scanned image. If the pixel is in a fluorescent color correspondence area of the output image, this bit is set to 1; if the pixel is not in a fluorescent color correspondence area of the output image, the bit is set to 0. In other words, an area information value of 1 indicating the pixel is in a fluorescent color correspondence area is added to all pixels in a fluorescent color correspondence area of the output image.

Returning to FIG. 14, the image reading device 1 outputs the output information generated in S30, that is, output information including area information identifying pixels in a fluorescent color correspondence area added to the pixels inside the fluorescent color correspondence area of the output image generated in S29, as a single image file to the external device 100 (S31).

Information identifying a fluorescent color area E1 does not necessarily need to be added to individual pixels as in the area information above, and may be added as coordinate data identifying the location of the fluorescent color area E1, for example, to the file header or a separate file. When added as a separate file, the file set of the image file of the output image and the file identifying the locations of fluorescent color areas E1 is equivalent to the output information.

The information identifying the fluorescent color areas E1 may be expressed by three or more coordinate data, and the area defined by the coordinates based on the coordinate data may be identified as a fluorescent color area E2. When the document S is a text document, the page count, number of lines, number of columns, number of characters from a specific character, and other information may also be included as information identifying a fluorescent color area E1.

Information identifying a fluorescent color area E1 is also not limited to the location of the fluorescent color, and may include information identifying what color the fluorescent color is. For example, a pixel that is not a fluorescent color may be identified by a 0 bit in the α channel, and fluorescent colors may be identified by a specific value identifying a specific fluorescent color.

RGB pixel values are used as an example of color information above, but if the image processor 40 is configured to convert colors for printing, CMYK color information may be generated. Color information based on YCbCr, Lab, and other color spaces may also be generated.

As described above, the image reading device 1 according to the second embodiment of the invention adds area information identifying pixels in a fluorescent color area E1 to the pixels in the fluorescent color correspondence area of the output image based on the scanned image, and generates output information that is output to an external device 100. Based on the area information, an external device 100 in this configuration can appropriately process fluorescent color correspondence areas in the output image.

Because fluorescent colors are generally used in places a user wants to highlight, by outputting the output information to an external device 100, fluorescent color correspondence areas can be desirably converted and highlighted, and the fluorescent color correspondence areas can be emphasized, on the external device 100 side.

If the external device 100 is a printer, or if the image reading device 1 is part of a multifunction device including a printer unit, a printed image resulting from the desired color conversion and highlighting process can be output by the printer or the printer unit. In addition, if the printer or the printer unit can print using fluorescent materials, a printout accurately reproducing the document S can be produced.

When the document S is scanned with the color setting set to the monochrome mode, the output image will be produced with the fluorescent color correspondence area reproduced as a solid gray or black. However, because the printer or printer unit in this configuration can highlight the fluorescent color areas, the fluorescent color area E1 can be highlighted regardless of the color setting.

Yet further, by the image reading device 1 adding area information to pixels in the fluorescent color correspondence area, the external device 100 that acquires the output information can determine the fluorescent color correspondence area by pixel unit.

Furthermore, because there is no need to add coordinate data as information identifying a fluorescent color area E1, problems such as the amount of data in the output information increasing because the shape of the fluorescent color correspondence area is complex can be avoided.

In addition, by adding area information to the α channel, the external device 100 that acquires the output information can easily determine whether or not a particular pixel is in a fluorescent color correspondence area.

By applying a color conversion process that converts the color of specific pixels in fluorescent color areas E1 to a color based on the pixels surrounding the fluorescent color area E1, the image reading device 1 can also execute a wide range of processes on the printer or other device that acquires the output information. In other words, when the image reading device 1 does not execute a color conversion process, the output image will be output with fluorescent colors remaining in the fluorescent color correspondence area, a highlighting process will be applied to fluorescent colors on the external device 100 side, and the appearance of the image may be impaired. As a result, the processes that can be executed on the external device 100 side are limited when color conversion processing is not applied on the image reading device 1, but because the image reading device 1 according to this embodiment runs the color conversion process, this problem is prevented.

### Embodiment 3

A third embodiment of the invention is described next. The second embodiment described above generates output information including the output image and information identifying fluorescent color areas E1. This embodiment generates an output image by merging an image identifying the fluorescent color areas E1 with the scanned image.

This embodiment is described focusing on differences with the second embodiment. Like parts in this embodiment and the first and second embodiments described above are identified by like reference numerals, and further description thereof is omitted. Variations applicable to like elements in this embodiment and the first and second embodiments are also applicable to this embodiment.

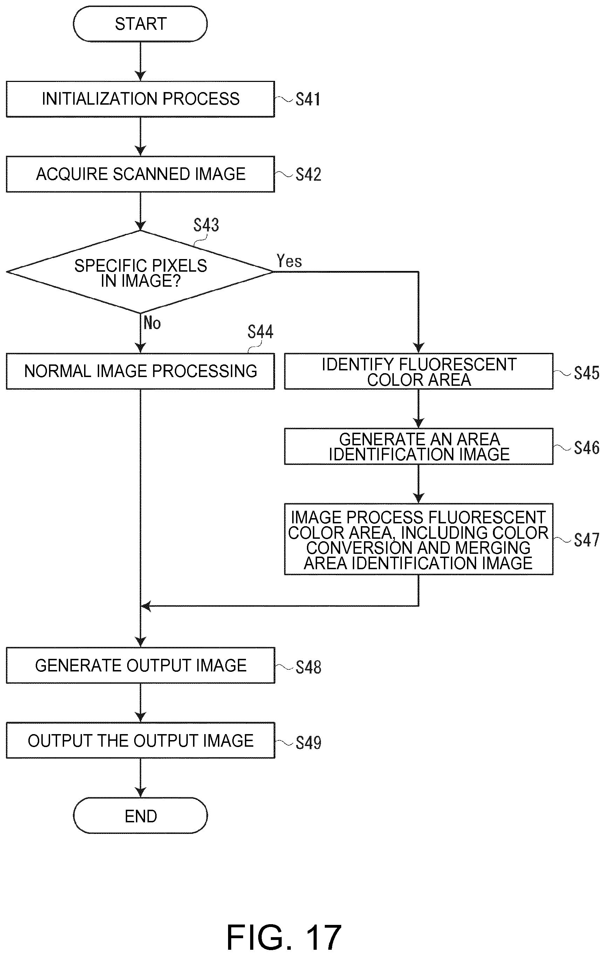

FIG. 17 is a flow chart of the output image generating method of the image reading device 1.

When the document S reading process starts, the image reading device 1 first executes the initialization process (S41), and then acquires a scanned image (S42). The image reading device 1 then determines if specific pixels are contained in the acquired scanned image (S43), and if it determines there are no specific pixels (S43: No), executes normal image processing steps such as shading correction, gamma correction, line correction, and skew correction (S44).

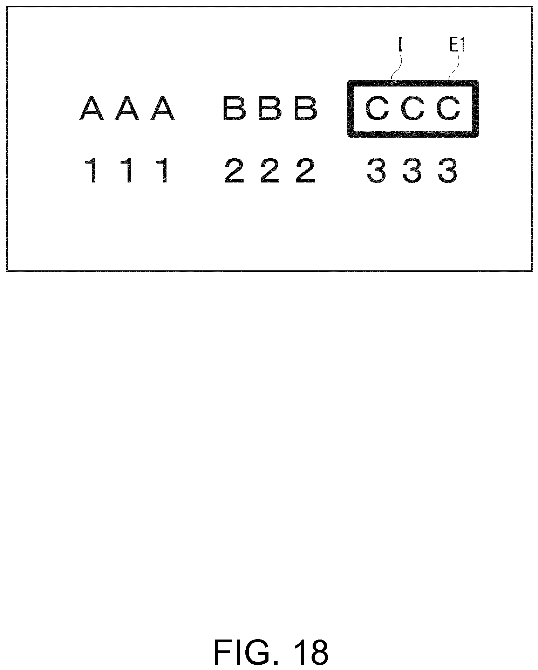

If the scanned image is determined to contain specific pixels (S43: Yes), the image reading device 1 identifies the fluorescent color areas E1 containing the specific pixels (S45). The image reading device 1 also generates an area identification image I (see FIG. 18)) identifying the fluorescent color areas E1 (S46).

The image reading device 1 then executes an image process including a color conversion process and merging the area identification image I with the fluorescent color areas E1 in the scanned image (S47). The color conversion process is the same as in the second embodiment.

Generating the area identification image I and the merging process are described below.

FIG. 18 shows an example of the result of the color conversion process and area identification image I merging process applied to the scanned image in FIG. 6. This example shows a contour line enclosing the outside border of the fluorescent color area E1 as an example of the area identification image I. The contour line in the example is bold, but is not limited to a solid line, and may be a dotted line, broken line, double lines, or other configuration.

Returning to FIG. 17, the image reading device 1 generates an output image by applying the image processes of step S44 or S47 to the acquired scanned image (S48), and outputs the generated output image to the external device 100 (S49).

Note that the area identification image I is not limited to a contour line surrounding the fluorescent color area E1 as shown in FIG. 18, and may be a superimposed image overlaid on the fluorescent color area E1, or a masking image overlaying the area outside the fluorescent color area E1.

If a masking image is merged with the scanned image, the area outside the fluorescent color area E1 is masked, and the fluorescent color area E1 can be emphasized as a result. The overlaid image and the masking image may also be images with transparency, or images generated on a different layer than the scanned image.

The image reading device 1 may also change the type of the area identification image I and the color according to the color information of the specific pixels in the fluorescent color area E1 and the color setting. The image reading device 1 may also provide multiple area identification images I of different types and colors as candidates for the area identification image I, and merge the area identification image I selected by the user.

As described above, the image reading device 1 according to the third embodiment of the invention generates an output image by applying a merging process that merges an area identification image I identifying a fluorescent color area E1 with the scanned image. This configuration enables highlighting the fluorescent color area E1.

If the external device 100 is a printer, or if the image reading device 1 and a printer unit are an integrated multifunction device, the printer or the printer unit may not be able to satisfactorily reproduce the fluorescent colors, but this embodiment of the invention can reliably highlight the fluorescent color areas E1 in any situation.

More particularly, if the document S is scanned with the color mode set to monochrome, the output image will be generated with the fluorescent color area E1 reproduced as a solid gray or black area, but this embodiment of the invention can highlight fluorescent color areas E1 regardless of the color setting.

Three preferred embodiments of the invention are described above, but the invention is not so limited and the foregoing embodiments may be combined as desired with the variations described below.

### Variation 1

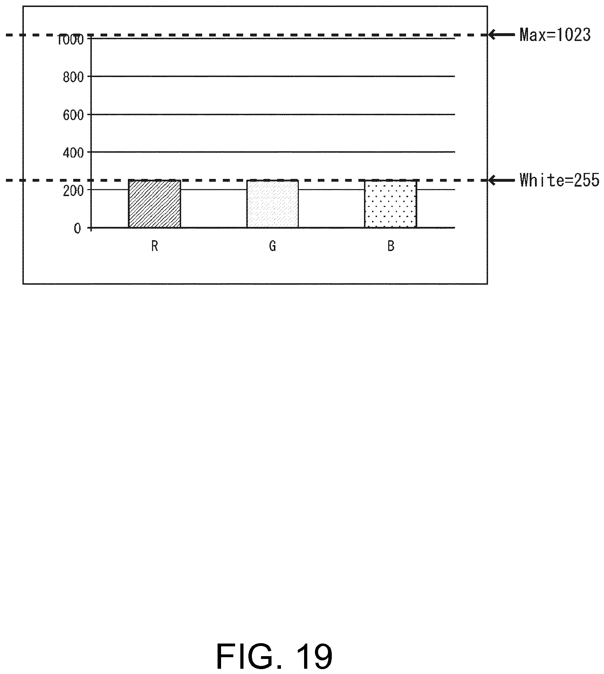

In the foregoing embodiments the controller 60 sets the white reference value so the output value of the color sensor 33 is 160 when the maximum output value of the color sensor 33 is 255 and white is read (see FIG. 4). However, as shown in FIG. 19, the white reference value may be set so the maximum output value of the color sensor 33 is 1023 (= 10 bits) when the output value of the color sensor 33 when white is read is the same 255 as in the conventional white reference setting method (see FIG. 3).

Note that 1023 is simply one example of the maximum output value of the color sensor 33, and a 9 bit, 12 bit, or other value may be used. In this configuration, the second normalization process is not limited to a linear conversion, and a simple bit masking process taking the lowest eight bits, for example, may be used.

### Variation 2

In the foregoing embodiments the controller 60 defines the inside of an area where consecutive specific pixels are present as part of the fluorescent color area E1, or more specifically when a text character is inside the fluorescent color area E1 defines the lines of the character as part of the fluorescent color area E1, but there are various ways of determining the fluorescent color area E1.

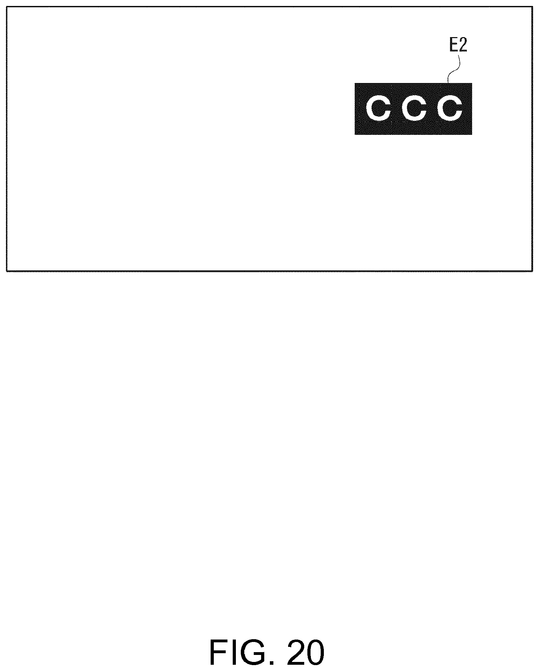

For example, the fluorescent color area may be defined to exclude the lines of characters. FIG. 20 describes the method of identifying the fluorescent color area E2 in this example. Using the scanned image shown in FIG. 6, this example defines the area in black in FIG. 20 as the fluorescent color area E2. More specifically, this example defines the fluorescent color area E2 as the area inside the fluorescent color area E1 where specific pixels are not consecutive, that is, the area excluding the pixels corresponding to the lines of the letters. This configuration enables color converting not only the specific pixels in the fluorescent color area E2, but color converting all pixels in the color conversion processes of the second embodiment and third embodiment above. In addition, in the merging process of the third embodiment, this configuration enables combining, as the image identifying the fluorescent color area E1, character images in which the color or thickness of the character lines is changed.

### Variation 3

The image processor 40 in the first embodiment applies a first normalization process to fluorescent color areas E1 in the scanned image, and applies a second normalization process to normal color areas, but may apply the first normalization process to the entire scanned image, and if there are no specific pixels in the scanned image, apply the second normalization process to the entire scanned image.

In other words, when there are specific pixels somewhere in the scanned image, the entire scanned image may be treated as a fluorescent color area E1. When there are no specific pixels in the scanned image, the pixel values may be corrected so that the pixel values of all pixels in the scanned image are greater than when there are specific pixels in the scanned image. In addition, when there are no specific pixels in the scanned image, the white reference value may be set as the maximum output value of the color sensor 33 instead of setting the scanning settings to a first setting.

Another example is a configuration that does not determine if there are specific pixels in the scanned image. In this configuration, the white reference value is set to 75% to 95% of the maximum output value of the color sensor 33, and the output values of the color sensor 33 are used as is without normalization, for example, to generate the output image. This configuration produces scanning results in which normal color areas are slightly dark, but can improve the reproducibility of fluorescent colors without special image processing. In an operating mode that assumes specific pixels are present in the scanned image, this configuration accelerates operation equally to the time not consumed to determine if there are specific pixels.

### Variation 4

In the first embodiment described above, the controller 60 uses the white reference value as the reference value in the second normalization process, but instead of using the white reference value, may use a value based on the white reference value, such as the result of a specific value added to, subtracted from, or multiplied by the white reference value, as the reference value.

In the first normalization process the highest pixel value in the fluorescent color area E1 is set as the first reference value, but the first reference value is not so limited, and may be set to any value greater than the white reference value. For example, a value greater than the highest pixel value in the fluorescent color area E1 may be set as the first reference value.

In yet another example, the first reference value may be set in the first normalization process so that the highest pixel value in the fluorescent color area E1 is 2ⁿ-1. This configuration enables using a simple bit shifting process as the first normalization process.

### Variation 5

In the first embodiment described above the image processor 40 executes the normalization process using a linear conversion, but the normalization process may use methods other than a linear conversion. More specifically, the normalization process may correct pixel values based on a specific rule using the first reference value or white reference value as the maximum value.

### Variation 6

The controller 60 in the first embodiment described above sets a first reference value for each fluorescent color area E1 when there are multiple fluorescent color areas E1 in the scanned image, but may set a common first reference value for all fluorescent color areas E1 contained in the scanned image. In addition, when the document S is a cut-sheet document, a common first reference value may be set for all fluorescent color areas E1 contained in the scanned image of a single page.

### Variation 7

In the second and third embodiments described above, the controller 60 executes the same process regardless of the color setting, but may be configured to add information identifying the fluorescent color areas E1 to the output image, or merge an image identifying the fluorescent color area E1 with the scanned image, when the color setting is set to monochrome, or configured to not execute these processes when the color setting is set to color.

### Variation 8

In the embodiments described above the image scanner 30 has color filters disposed to the color sensor 33, and uses a color sensor method that scans images with a white light source 31, but other scanning methods may be used, such as a light source color switching method that changes the color of the light emitted from the light source while scanning.

### Variation 9

In the embodiments described above the image reading device 1 has a document presser 71 that also functions as a white reference plate, but may be configured with a white reference plate that is separate from the document presser, or configured without a white reference plate. If configured without a white reference plate, a white reference plate may be temporarily attached in the factory during production, the white reference value measured and stored in memory, and the white reference plate then removed prior to shipping. In this case, during actual use, the white reference value to be used for scanning is calculated by correcting the white reference value stored before shipping, and the calculated white reference value may be used for scanning.

### Variation 10

The foregoing embodiments describe an image reading device 1 having only a scanner function for outputting images, but the image reading device according to the invention may also be used in a multifunction device having a printer function for producing printouts, a facsimile function for sending and receiving faxes, an external memory function for outputting files to an external memory device, and a display for displaying output, for example.

The scanner may also be a sheet-feed scanner that scans while conveying documents S, or a flatbed scanner that scans documents S placed on a platen.

The image reading device of the invention can also be applied to imaging devices other than scanners, and to handheld devices having a built-in camera.

### Other variations

Methods of executing processes of the image reading device 1 described in the foregoing embodiments and variations, a program for executing the processes of the image reading device 1, and a computer-readable storage medium storing such a program, are also included in the scope of the invention. Configurations combining the foregoing embodiments and variations in various ways are also conceivable without departing from the scope of the invention as described in the accompanying claims.

## Claims

1. An output image generating method of an image reading device (1), comprising:
an acquisition step (S12) of reading a document (S) and acquiring a scanned image; and
a generating step of generating an output image by applying different image processes (S16, S17) to the scanned image according to whether or not specific pixels, which are pixels with a pixel value greater than a white reference value, are contained in the scanned image, and
when the specific pixels are not contained in the scanned image, applying an image process of correcting pixel values of pixels in the scanned image to higher pixel values than when the specific pixels are contained in the scanned image.

2. The output image generating method of an image reading device described in claim 1, further comprising:
a setting step (S11) of setting a scanning setting to a first setting making the white reference value a lower value than the maximum value of a dynamic range of an image reading sensor;
the acquisition step reading the document at the first setting and acquiring the scanned image.

3. The output image generating method of an image reading device described in claim 1 or claim 2, wherein:
the generating step executes a first normalization process, which is a normalization process setting a value greater than the white reference value as a maximum value, when the specific pixels are contained in the scanned image, and
when the specific pixels are not contained in the scanned image, corrects pixel values of pixels in the scanned image by executing a second normalization process, which is a normalization process using the white reference value as a maximum value.

4. The output image generating method of an image reading device described in claim 3, wherein:
when the specific pixels are contained in the scanned image, the generating step applies the first normalization process to a first area containing the specific pixels in the scanned image, and applies the second normalization process to an area outside the first area.

5. The output image generating method of an image reading device described in claim 4, wherein:
the first normalization process is a normalization process using as a maximum value a value greater than or equal to a highest pixel value of the pixels in the first area.

6. An output image generating method of an image reading device, comprising:
an acquisition step (S12) of reading a document (S) and acquiring a scanned image at a setting making a white reference value a value lower than a maximum value of a dynamic range of an image reading sensor; and
a generating step (S16, S17) of generating an output image by applying different normalization processes to the scanned image according to whether or not specific pixels, which are pixels with a pixel value greater than the white reference value, are contained in the scanned image.

7. The output image generating method of an image reading device described in claim 6, wherein:
the generating step applies a first normalization process to the scanned image when the specific pixels are contained in the scanned image, and
when the specific pixels are not contained in the scanned image, applies a second normalization process that is different from the first normalization process to the scanned image, and does not apply the first normalization process.

8. The output image generating method of an image reading device described in claim 7, wherein:
the first normalization process is a normalization process setting a value greater than the white reference value as a maximum value, and the second normalization process is a normalization process setting the white reference value as a maximum value.

9. An image reading device (1) comprising:
an acquirer (30) configured to read a document (S) and acquire a scanned image; and
a generator (40, 60) configured to generate an output image by applying different image processes to the scanned image according to whether or not specific pixels, which are pixels with a pixel value greater than a white reference value, are contained in the scanned image, and
when the specific pixels are not contained in the scanned image, to apply an image process of correcting pixel values of pixels in the scanned image to higher pixel values than when the specific pixels are contained in the scanned image.

10. An image reading device (1) comprising:
an acquirer (30) configured to read a document (S) and acquire a scanned image; and
a generator (40, 60) configured to generate an output image by applying different normalization processes to the scanned image according to whether or not specific pixels, which are pixels with a pixel value greater than a white reference value, are contained in the scanned image.
